# EUROPEAN PATENT APPLICATION

(11) **EP 1 720 364 A1**
(43) Date of publication of application: **08.11.2006**
(21) Application number: 05719336.9
(22) Date of filing: 21.02.2005
(51) Int. Cl.: H04Q 7/22, H04L 12/28, H04L 12/56, H04Q 7/28, H04Q 7/38

(54) **MOBILE SUBSCRIBER NETWORK AND RESOURCE MANAGEMENT METHOD**

(30) Priority: 23.02.2004 JP 2004046006
(71) Applicant: NEC CORPORATION, Minato-ku, Tokyo 108-8001 (JP)
(72) Inventor: NAKATA, Tsuneo, c/o NEC Corporation, Tokyo 1088001 (JP)
(74) Representative: Betten, Jürgen
(86) International application number: PCT/JP2005/002717
(87) International publication number: WO 2005/081559

(57) **Abstract**

In allocating a resource circuit by circuit, a reference is made to a table signifying a one-versus-many correspondence between a subscriber and a circuit, thereby to reflect a state of the other circuit that an identical subscriber holds into the above resource allocation. As a rule, the table is dynamically updated, responding to a new circuit request by the subscriber holding a plurality of terminal apparatuses and a change in a network situation such as a load. This enables setting/observation of service conditions to be realized subscriber by subscriber in a subscriber network in which one subscriber occupies a plurality of the circuits. Further, this allows the occupied circuit number a subscriber not to be limited to the number of the circuit that is packaged onto one terminal.

## Description

### [APPLICABLE FIELD IN THE INDUSTRY]

The present invention relates to a configuration of a subscriber network and an operational method thereof, and more particularly, to a dynamic resource administration in a mobile subscriber network in which each subscriber can occupy a plurality of circuits.

### [BACKGROUND ART]

There exists an Air H" 128-Kbps service (http://www.willcom-inc.com/ja/index.html) that WILLCOM. Inc. provides as a mobile network technology that enables the subscriber to utilize a plurality of access circuits. This technology uses an ISDN circuit of a wireless base station to bundle at most four 32-Kbps circuits, thereby allowing a 128-Kbps packet communication service to be provided.

Further, similarly to the foregoing Air H" 128-Kbps service, the technology for efficiently employing a limited resource within an identical service has been also disclosed (for example, Patent document 1, Patent document 2, and Patent document 3).

Further, as the conventional example of the technology for dynamically administering the resource allocation to the access circuit is listed the resource administration technology in various mobile communication systems in accordance with the IMT-2000 international standard (http//www.imt-2000.org/) that is commonly known as the standard for the third-generation mobile telephone network.

In these systems, a controller that exists over a wireless access network is employed, thereby to dynamically carry out the resource allocation to the circuit responding to control parameters such as an occupation situation of the resource and a wireless link quality.

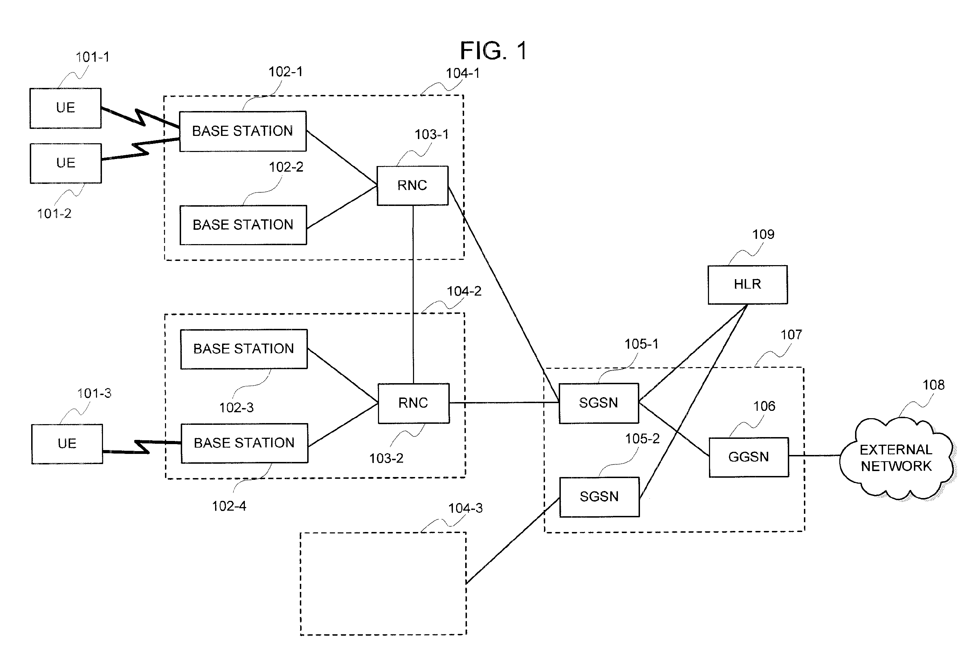

The package of the resource administration technology in a W-CDMA network, being one of the IMT-2000 international standards, will be explained by employing Fig. 1. Each of user terminal apparatuses (UE: user equipment) 101-1 to 101-3 has a connection with one of base stations 102-1 to 102-4, which exist within an access area, via a wireless link. Each of radio network controllers (RNC) 103-1 and 103-2 takes a wireless resource administration over a radio network sub-system (RNS 104-1 and RNS 104-2) to which each belongs.

Packet access control nodes (SGSN: Servicing GPRS Support Nodes) 105-1 and 105-2 grasp which RNS each UE belongs to, and carries out a setting of, a change to, and a releasing request for the wireless access circuit for the RNC. The RNC carries out the resource allocation for each circuit responding to an availability of the wireless resource and a priority degree of the request by the SGSN, and notifies its result to the SGSN. A GGSN 106 functions as a gateway node to an external network 108, and is connected to the SGSN via a packet switching core network 107.

Information such as an ID, positional information, a service subscription situation, and a charging situation of each subscriber is filed into a home location register (HLR) 107, being a concentrated database within the network. When the UE is registered (attached), the SGSN collects subscriber information of its UE from the HLR. The attached UE can request a session start of the SGSN. A detailed attribute of the requested session is exchanged in the form of a data set that is called a PDP context. When the SGSN receives the request from the UE, it makes a reference to a request condition that exists in the PDP context and the subscriber information collected from the HLR, thereby, to transmit a resource allocation request to the RNC. In a case where the new circuit setting becomes difficult to receive, or all circuits that are in use becomes difficult to maintain for lack of the resource, the circuit is disconnected, beginning with the circuit of which the priority degree is lower.

[Patent document 1]
   JP-P1997-200253A
[Patent document 2]
   JP-P1999-203228A
[Patent document 3]
   JP-P2002-2171300A

### [DISCLOSURE OF THE INVENTION]

### [PROBLEMS TO BE SOLVED BY THE INVENTION]

With the communication method that is employed for the conventional Air H" 128-Kbps service, there exists the problem that the number of the circuits that one subscriber can utilize is restricted to four circuits that are packaged onto the terminal, and the circuit cannot be increased additionally in the subscriber side even though a wider bandwidth is necessitated.

In addition hereto, there exists the problem that the technologies described in the Patent documents 1, 2 and 3, and the IMT-2000 mobile communication system, which correspond to fast migration, enable the resource distribution to be dynamically controlled in the network side; nevertheless, the service in which the identical subscriber employs a plurality of the circuits has not been specified.

There exists the problem that, even though the correspondence to such a service is packaged by a control in a third layer or a layer higher than it, it is difficult to set/observe the service condition such as guarantee of the bandwidth and the circuit number in a subscriber unit because the resource allocation in a second layer is carried out in a circuit unit.

Thereupon, the present invention has been accomplished in consideration of the above-mentioned problems, and an object thereof is to provide a technology that enables the setting/observation of the service condition to be realized subscriber by subscriber, and the subscriber network in which one subscriber can occupy a plurality of the circuits to be constructed.

### [MEANS TO SOLVE THE PROBLEM]

The first invention for solving the above-mentioned problems, which is a mobile subscriber network, is characterized in including:
a circuit administration table for retaining a many-versus-one correspondence between circuit terminals and a subscriber;
a means for reflecting a new circuit request or a change in a network state into the circuit administration table, thereby to dynamically update the circuit administration table; and
a means for, based upon the circuit administration table, reflecting into a resource allocation to each circuit.

The second invention for solving the above-mentioned problems is characterized in, in the above-mentioned first invention, including a means for, in requesting a circuit setting by the subscriber, or in handing over the circuit in use, making a reference to a state of other circuit of the subscriber that is obtained from the circuit administration table, thereby to compute a circuit number or a bandwidth that the subscriber can use.

The third invention for solving the above-mentioned problems is characterized in, in one of the above-mentioned first and second inventions, including a means for calculating the circuit that is disconnected based upon the circuit administration table in a work for disconnecting the circuit that a fixed network starts.

The fourth invention for solving the above-mentioned problems is characterized in, in one of the above-mentioned first to third inventions, including a means for changing a resource allocation priority degree of the circuit that is affected due to updating the circuit administration table.

The fifth invention for solving the above-mentioned problems is characterized in, in one of the above-mentioned first to fourth inventions, including a means for reflecting the updating of the circuit administration table into the resource allocation to each circuit by communication with a circuit-setting means.

The sixth invention for solving the above-mentioned problems is characterized, in one of the above-mentioned first to fourth inventions, including a means for reflecting the updating of the circuit administration table into the resource allocation to each circuit by communication with the circuit terminal.

The seventh invention for solving the above-mentioned problem is characterized, in one of the above-mentioned first to sixth inventions, in including a means for retaining a service condition of the subscriber in the circuit administration table to reflect this service condition into the resource allocation.

The eighth invention for solving the above-mentioned problems, which is a resource administration method, is characterized in including the steps of:
retaining information of a one-versus-many correspondence between a subscriber and a circuit with which the subscriber enters into a contract and reflecting a new circuit request or a change in a network state into a circuit administration table, thereby to dynamically update the circuit administration table; and
carrying out a resource allocation to each circuit based upon the circuit administration table.

The ninth invention for solving the above-mentioned problems is characterized, in the above-mentioned eighth invention, in including a step of, in requesting a circuit setting by the subscriber, or in handing over the circuit in use, making a reference to a state of other circuit of the subscriber that is obtained from the circuit administration table, thereby to compute a circuit number or a bandwidth that the subscriber can use.

The tenth invention for solving the above-mentioned problems is characterized in, in one of the above-mentioned eighth and ninth inventions, including a step of calculating the circuit that is disconnected based upon the circuit administration table in a work for disconnecting the circuit that a fixed network starts.

The eleventh invention for solving the above-mentioned problems is characterized in, in one of the above-mentioned eighth to tenth inventions, including a step of changing a resource allocation priority degree of the circuit that is affected due to updating the circuit administration table.

The twelfth invention for solving the above-mentioned problems is characterized in, in one of the above-mentioned eighth to eleventh inventions, including a step of, based upon information in the network side, updating the circuit administration table to reflect this into the resource allocation to each circuit.

The thirteenth invention for solving the above-mentioned problems is characterized in, in one of the above-mentioned eighth to twelfth inventions, including a step of, based upon information in the terminal side, updating the circuit administration table to reflect this into the resource allocation to each circuit.

### [EFFECTS OF THE INVENTION]

The present invention enables the setting/observation of the service conditions to be realized subscriber by subscriber, and the subscriber network in which one subscriber can occupy a plurality of the circuits to be constructed.

### [BRIEF DESCRIPTION OF THE DRAWINGS]

[Fig. 1] Fig. 1 is a view for explaining the prior art.
[Fig. 2] Fig. 2 shows one configuration example of an embodiment 1 of the present invention.
[Fig. 3] Fig. 3 is a view illustrating one example of the circuit administration table.
[Fig. 4] Fig. 4 is a view illustrating an execution example of circuit setting algorithm.
[Fig. 5] Fig. 5 is a view illustrating one configuration example of an embodiment 3.
[Fig. 6] Fig. 6 is a view illustrating the configuration example of the embodiment 3.

### [DESCRIPTION OF NUMERALS]

- 101: subscriber terminal apparatus
- 102: base station
- 103: radio network sub-system
- 104: radio access network
- 105: access control node
- 106: gateway node
- 107: core network
- 108: external network
- 203: resource administration server
- 204: access network
- 205: circuit-setting server
- 209: subscriber information administration server
- 210: mobile communication network
- 300: access controller

### [BEST MODE FOR CARRYING OUT THE INVENTION]

In the present invention, in allocating the resource circuit by circuit, a reference is made to the table signifying a one-versus-many correspondence between the subscriber and the circuit, thereby to reflect the state of the other circuit that the identical subscriber holds into the above resource allocation. As a rule, the table is dynamically updated, responding to a new circuit request by the subscriber who holds a plurality of the terminal apparatuses, and a change in the network situation such as a load. This enables the setting/observation of the service conditions to be realized subscriber by subscriber in the subscriber network in which one subscriber occupies a plurality of the circuits.

In addition hereto, this allows the number of the occupied circuit a subscriber not to be limited to the number of the circuit that is packaged onto one terminal.

Hereinafter, specific embodiments will be explained.

### [Embodiment 1]

The embodiment 1 of the present invention will be explained.

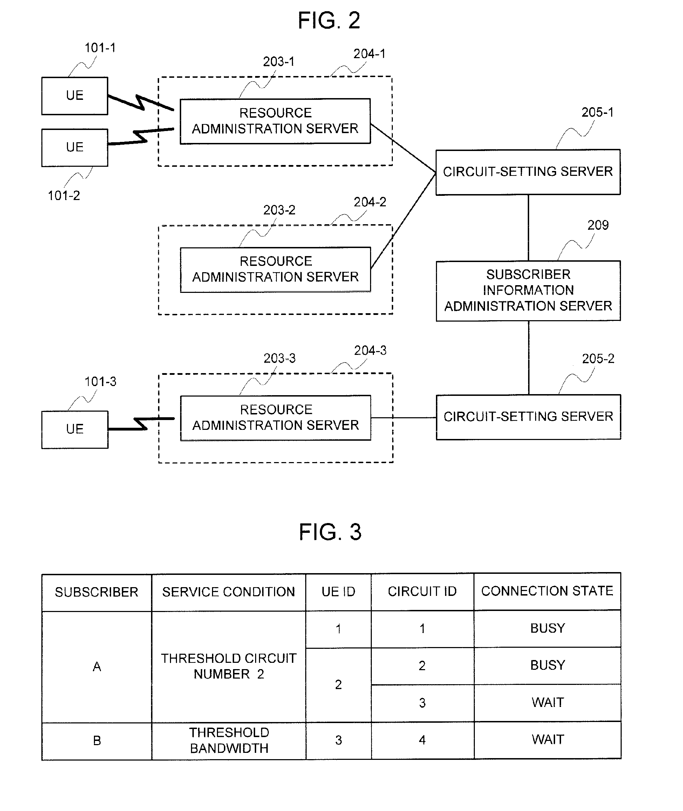

A configuration of the embodiment 1 shown in Fig. 2 is comprised of subscriber terminals (UE) 101-1 to 101-3, resource administration servers 203-1 to 203-3, a plurality of access networks 204-1 to 204-3 having these resource administration servers 203-1 to 203-3 mounted, a plurality of circuit-setting servers 205-1 and 205-2, and a subscriber information administration server 209.

It is assumed that the circuit-setting server 205-1 is communicable with each of the resource administration servers 203-1 and 203-2 connected to its own, and, further, the subscriber information administration server 209 is communicable with the circuit-setting server 205-1. Similarly, it is assumed that the circuit-setting server 205-2 is communicable with the resource administration server 203-3 connected to its own, and, further, the subscriber information administration server 209 is communicable with the circuit-setting server 205-2.

The subscriber information administration server 209 retains the circuit administration table, being a table signifying a one-versus-many correspondence between the subscriber and the circuit as shown in Fig. 3, together with positional information etc. of each of the subscriber terminals (UE) 101-1 to 101-3. IDs of the subscriber and the subscriber terminal (UE) and an ID of the circuit, the service condition of each subscriber, and a connection state of each circuit are filed into this circuit administration table.

Next, an operation in the configuration mentioned above will be explained.

Additionally, in this operation, it is assumed that the subscriber information administration server 209 retains all circuits, to which the subscriber terminals (UE) 101-1 to 101-3 within the wireless area are terminated, on the circuit administration table owing to the configuration in which the process such as an attach process, for example, in the W-CDMA network is performed. With the circuit that is not in use, its connection state is "wait" on the circuit administration table. The subscriber can request of the network an arbitrary number of the circuits equal to or less than the total number of the registered circuits, and, further, can set the service condition, being the condition necessary for maintaining the minimum service, besides this. The service condition is signified, for example, with the circuit number or the bandwidth that becomes a threshold as listed in the second row of Fig. 3.

A plurality of the new circuit setting requests by the subscriber are notified to the subscriber information administration server via the corresponding circuit-setting server 205. The subscriber information administration server decides a set of the circuits that is set responding to the requested circuit number, and notifies a resource acquisition trial start to a plurality of the corresponding circuit-setting server 205. Further, the connection state of the circuit for which the resource acquisition trial start has been notified is updated from "wait" into "under trial" simultaneously with the notification.

The circuit-setting server 205 having received the trial start notification transmits the resource allocation request to the resource administration server 203 in parallel circuit by circuit, thereby allowing the trial of the resource acquisition to be carried out. When the circuit-setting server 205 receives a resource allocation result from the resource administration server 203, it notifies it to the subscriber information administration server 209.

The subscriber information administration server 209 draws a conclusion on propriety of the use for each circuit by making a reference to the service condition of the corresponding subscriber or the state of the other circuit belonging to the identical subscriber on the circuit administration table. This conclusion is notified to the circuit-setting server, and the circuit-setting server 205 having received the notification carries out the setting work for the circuit that is usable and the resource release work for the circuit that is unusable (in a case of having secured the resource till then).

The algorithm (condition) for drawing a conclusion on propriety of the use of the circuit in the subscriber information administration server 209 is arbitrary; however, for example, the following example is thinkable. Additionally, it is assumed that a threshold circuit number n is specified as the service condition.

(1) When a setting request of m circuits is received from a subscriber, m circuits are selected from among the circuits in a "wait" state that the above subscriber holds, and the state of the circuit is changed to "under trial", and the resource acquisition trial start is notified to the circuit-setting server that corresponds to each of the selected circuits.

(2) When a success in securing the resource of the circuit that is in a state of "under trial" is notified, the state of the circuit is changed to "success". Further, when a failure in securing the resource of the circuit that is in a state of "under trial" is notified, the state of the circuit is changed to "failure".

(3) If n or more circuits are in a state of "success" or "busy", it is judged that the circuits are usable, all circuits that are in a state of "success" are changed to the "busy" circuits, all circuits that are in a state of "failure" are changed to the "wait" circuits, and the use start of the "success" circuit and the resource release of the "failure" circuit are notified to the circuit-setting server. Otherwise, nothing is done.

(4) The total number of the circuits that are in a state of "busy", "success" and "under trial" is less than n in all, it is judged that the circuits are unusable, all circuits that are in a state of "under trial", "success" and "failure" are changed to the "wait" circuits, and the resource release of the circuits of which the state has been changed is notified to the circuit-setting server.

(5) The notification of the success and the failure in securing the resource of the circuit that is not in a state of "under trial" is ignored.

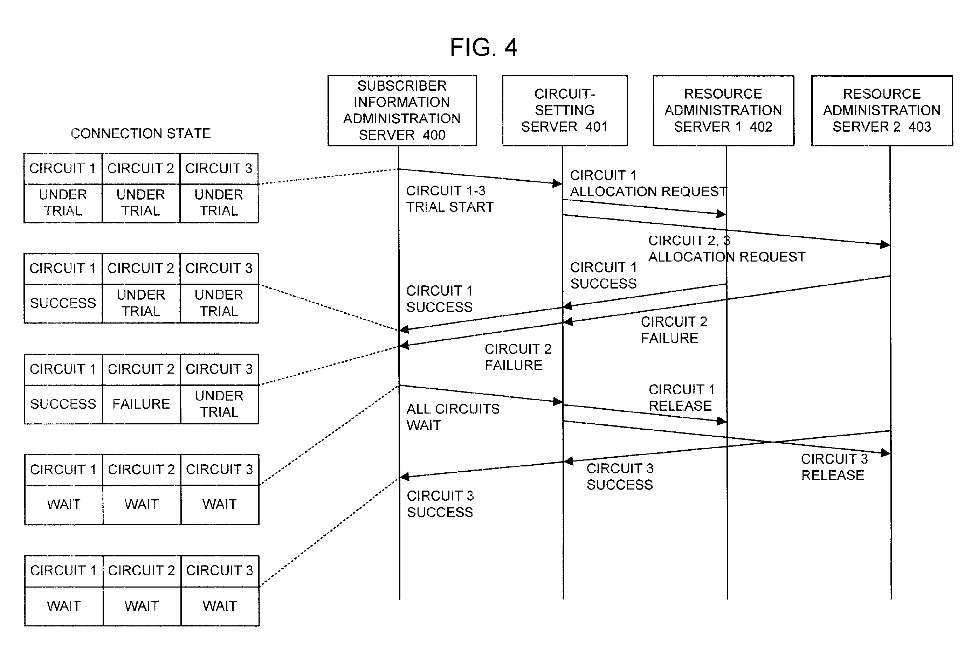

An execution example of the algorithm mentioned above is shown in Fig. 4. Additionally, it is assumed that the threshold circuit number is three.

Fig. 4 illustrates a message exchange between each of the servers and the other made after a certain subscriber requested the new circuit setting, and a change in the connection state of each circuit on the subscriber information administration table.

At first, a subscriber information administration server 400, which received the request for setting three circuits from the subscriber, notifies the trial start of securing the resources of a circuit 1, a circuit 2, and a circuit 3 to a circuit-setting server 401, and at this time point, the connection state is all updated into "under trial".

The circuit-setting server 401 sends a resource allocation request of the circuit 1 to a resource administration server 402, and a resource allocation request of the circuit 2 and the circuit 3 to a resource administration server 403, respectively.

At first, a reply to the success in securing the resource of the circuit 1 is given, and with the connection state, only the circuit 1 comes into a state of "success". Next, a reply to the failure in securing the resource of the circuit 2 is given, and with the connection state, the circuit 1 comes into a state of "success", the circuit 2 into a state of "failure", and the circuit 3 into a state of "under trial", respectively. At this time point, according to the above-mentioned condition (4), the subscriber information administration server 400 judges that all requested circuits are unusable, and notifies the resource release to the circuit-setting server 401.

The circuit-setting server 401 having received this notifies the resource release to the resource administration servers 402 and 403 that correspond to the circuit 1, which have already secured the resource, and the circuit 3, which is under trial of the resource acquisition, respectively.

Finally, a reply to the success in securing the resource of the circuit 3 is given; however this is ignored according to the above-mentioned condition (5). At this time point, the resource of the circuit 3 has already been released owing to the subscriber information administration server's judgment at the time of the failure in securing the resource of the circuit 2.

The subscriber information administration server 400 detects a change also in the network state other than the request for setting the new circuit via communication with the circuit-setting server 401, and updates the affected connection state of each circuit. For example, the subscriber information administration server 400 updates the state from "busy" to "wait" at the moment of an unintended disconnection. Further, whenever a change in the state occurs, it makes a reference to the service condition and the state of the other circuit, thereby to carry out a predefined work such as the release of all circuits based upon a network operator's policy when it is judged that the service cannot be continued.

Further, with the circuit that is in a state of "wait", so long as it is clear that the subscriber requests much more bandwidths, it does not matter that the circuit setting is tried at any time. For example, the regular re-trial enables a best effort service for always acquiring the possible maximum bandwidth to be realized. Further, when the number of the already-secured circuits falls below a certain threshold, the operation such that the service is not stopped but the re-trial is repeated until the threshold circuit number can be secured is also possible.

Further, when the connection situation changes while the service is continued, the subscriber information administration server can change the priority degree of the circuit in use responding to a necessity. For example, in a case where a disconnection of the circuit in use, a decline in the speed, a travel to the access network of which the congestion is tighter, or the like is forecasted, and yet it is judged that the service condition of its subscriber is difficult to maintain with the currently-set priority degree kept, changing the priority degree to which a reference is made by the resource administration server in competing for acquisition of the resource of the circuit allows the service condition to be maintained. A change in the priority degree is notified to the circuit-setting server, the circuit-setting server transfers this to the resource administration servers that correspond to respective circuits, and the resource administration server processes a resource competition thereafter based upon the updated priority degree.

It is listed that the network resource can be effectively put into practical use as a merit of changing the priority degree while the service is continued. In a specific example, it is assumed that both of a subscriber A and a subscriber B who have the identical priority degree are using two circuits over a certain access network, and the threshold circuit number of both also is two. This both are using four circuits in all; however, it is assumed that there is only a portion for maintaining just the current situation as the resource of the access network. In this case, if the subscriber having a higher priority degree other than A and B requests two circuits newly, two of four circuits that A and B are using are lost. At this time, the subscribers A and B lose one circuit, respectively, if the priority degrees of four circuits are all identical, and in this case, there is the possibility that the services of both subscribers are lost. So as to prevent this, it is enough for the subscriber information administration server to differentiate each of both subscribers from the other in the priority degree at the time point that the resource has become insufficient. Doing so allows the subscriber of which the priority degree is higher to be protected also in a case where two circuits are lost.

Now think about the case that, on the contrary, both of the subscribers A and B request the best effort service without specifying the threshold circuit number and the bandwidth in the identical example. It is assumed that both of A and B use two circuits as an initial condition, respectively, similarly to the foregoing. In a case where two circuits are lost from this, it is exceedingly fair that each secures one circuit because each of A and B is a best effort user. So as to realize such a resource distribution, it is enough to set an unbalanced priority degree for two circuits that each subscriber is using. Doing so allows one circuit having a higher priority degree of each of A and B to be secured also in a case where two circuits are lost.

Further, a comparison with the configuration of Fig. 1 clearly demonstrates that the configuration of the embodiment of Fig. 2 resembles that of the W-CDMA network if the RNC is caused to correspond to the resource administration server, the SGSN to the circuit-setting server, and the HLR to the subscriber information administration server, respectively. Accordingly, the operational form in which an administrator of the W-CDMA network holds and administers the resource administration server, the circuit-setting server and the subscriber information administration server becomes simplest. **[Embodiment 2]**

An embodiment 2 of the present invention will be explained.

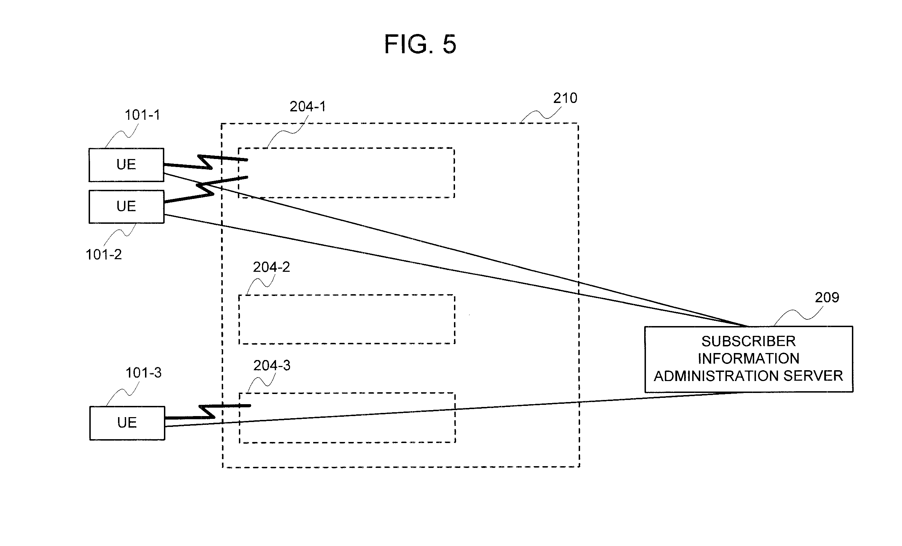

In the embodiment 1, the subscriber information administration server makes communication with the apparatus in the network side for mediation; however, in the embodiment 2, the subscriber information administration server makes communication with the terminal. The configuration example of the embodiment 2 is shown in Fig. 5.

The subscriber information administration server 209 of Fig. 5 holds the circuit administration table similar to that of Fig. 3. It is assumed that the subscriber information administration server holds a means for obtaining positional information of each subscriber in order to detect that the mediation becomes necessary at the moment that a plurality of the subscribers have requested the identical resource. With the acquisition of the positional information, information such as the access area in which each subscriber exists may be acquired, by making communication with the access network 204, and the information may be acquired, by employing the means other than the communication network such as a GPS system. Further, the communication means between the subscriber information administration server and the terminal is arbitrary, the information may be acquired via a mobile communication network 210, and it may be done by the other means that is independent. When the subscriber information administration server detects a competition of the resource request, it regulates the circuit number which each subscriber can request of the network responding to a situation.

For example, it is assumed that the subscriber A is using n circuits in the access area in which n circuits are receivable. In a case where the subscriber B is now going to try a hand-over process for the identical access area, the subscriber information administration server causes A to release one part of the circuits that A holds at the moment of the hand-over process by B, thereby allowing the fair resource distribution to both to be realized.

### [Embodiment 3]

An embodiment 3 of the present invention will be explained.

The embodiment 3 is characterized in that one part or the entirety of the subscribers employs an access controller for controlling the circuit request by a plurality of the terminals.

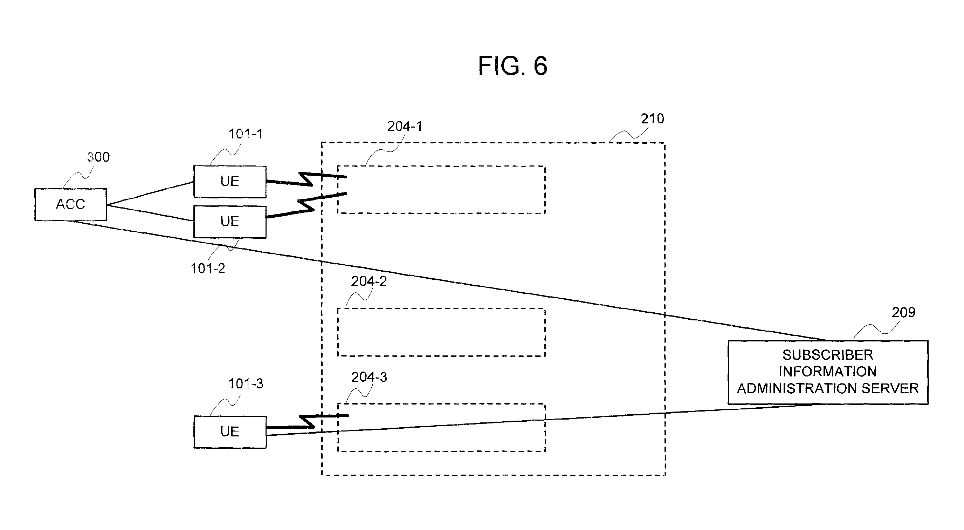

A configuration example of the embodiment 3 is shown in Fig. 6. In this example, the subscriber information administration server 209 detects a competition for acquiring the resource between the subscribers based upon the positional information similarly to the example shown in the embodiment 2, and regulates the circuit number that each subscriber can request responding to a situation.

In an example of Fig. 6, the subscriber information administration server 209 makes communication with an access controller 300, thereby allowing the requested circuit number to be regulated for the subscriber that can use the access controller 300. The access controller 300 gives an instruction for releasing the resource and for requesting the circuit setting to each connected terminal 101 based upon a notification from the subscriber information administration server 209.

## Claims

1. A mobile subscriber network, **characterized in** including:
a circuit administration table for retaining a many-versus-one correspondence between circuit terminals and a subscriber;
a means for reflecting a new circuit request or a change in a network state into said circuit administration table, thereby to dynamically update said circuit administration table; and
a means for, based upon said circuit administration table, reflecting into a resource allocation to each circuit.

2. The mobile subscriber network according to claim 1, **characterized in** including a means for, in requesting a circuit setting by the subscriber, or in handing over the circuit in use, making a reference to a state of the other circuit of the subscriber that is obtained from said circuit administration table, thereby to compute a circuit number or a bandwidth that said subscriber can use.

3. The mobile subscriber network according to claim 1, **characterized in** including a means for calculating the circuit that is disconnected based upon the circuit administration table in a work for disconnecting the circuit that a fixed network starts.

4. The mobile subscriber network according to claim 1, **characterized in** including a means for changing a resource allocation priority degree of the circuit that is affected due to updating said circuit administration table.

5. The mobile subscriber network according to claim 1, **characterized in** including a means for reflecting the updating of the circuit administration table into the resource allocation to each circuit by communication with a circuit-setting means.

6. The mobile subscriber network according to claim 1, **characterized in** including a means for reflecting the updating of the circuit administration table into the resource allocation to each circuit by communication with the circuit terminal.

7. The mobile subscriber network according to claim 1, **characterized in** including a means for retaining a service condition of the subscriber in the circuit administration table to reflect this service condition into the resource allocation.

8. A resource administration method, **characterized in** including the steps of:
retaining information of a one-versus-many correspondence between a subscriber and a circuit with which said subscriber enters into a contract and reflecting a new circuit request or a change in a network state into a circuit administration table, thereby to dynamically update said circuit administration table; and
carrying out a resource allocation to each circuit based upon said circuit administration table.

9. The resource administration method according to claim 8, **characterized in** including a step of, in requesting a circuit setting by the subscriber, or in handing over the circuit in use, making a reference to a state of the other circuit of said subscriber that is obtained from the circuit administration table, thereby to compute a circuit number or a bandwidth that said subscriber can use.

10. The resource administration method according to claim 8, **characterized in** including a step of calculating the circuit that is disconnected based upon said circuit administration table in a work for disconnecting the circuit that a fixed network starts.

11. The resource administration method according to claim 8, **characterized in** including a step of changing a resource allocation priority degree of the circuit that is affected due to updating said circuit administration table.

12. The resource administration method according to claim 8, **characterized in** including a step of, based upon information in the network side, updating the circuit administration table to reflect this into the resource allocation to each circuit.

13. The resource administration method according to claim 8, **characterized in** including a step of, based upon information in the terminal side, updating the circuit administration table to reflect this into the resource allocation to each circuit.
